# FASCICULE DE BREVET EUROPEEN

(11) **EP 2 528 812 B1**
(45) Date de publication et mention de la délivrance du brevet: **04.03.2015**
(21) Numéro de dépôt: 11706879.1
(22) Date de dépôt: 28.01.2011
(51) Int. Cl.: B64D 11/06

(54) **APPUI-TETE DE SIEGE DE PASSAGER D'AERONEF**
KOPFSTÜTZE FÜR EINEN PASSAGIERSITZ EINES FLUGZEUGES
HEADREST FOR A PASSENGER SEAT OF AN AIRCRAFT

(30) Priorité: 29.01.2010 FR 1050636
(43) Date de publication de la demande: 05.12.2012
(73) Titulaire: Airbus Operations, 31000 Toulouse (FR)
(72) Inventeur: GUERING, Bernard, F-31850 Montrabe (FR)
(74) Mandataire: Renault, Patricia Marie Jacqueline
(86) Numéro de dépôt international: PCT/FR2011/050169
(87) Numéro de publication internationale: WO 2011/092435

(56) Documents cités:
- WO-A1-96/09205
- DE-A1-102007 050 139
- DE-C1- 19 516 012
- FR-A1- 2 696 388
- FR-A1- 2 917 344
- US-A- 4 114 948
- US-A- 4 440 443
- US-A- 5 547 149

## Description

L'invention concerne les sièges de passager d'aéronef.

Le document DE 195 16 012 C1, qui représente l'art antérieur le plus proche montre un appui-tête de siège de passager comprenant un support et un casque pour loger au moins partiellement la tête du passager, le casque étant fixé au support.

Il arrive que, durant les voyages en avion, certains passagers connaissent des périodes d'ennui, que ce soit durant une phase d'attente précédant le décollage ou suivant l'atterrissage, ou durant une phase de croisière. On sait par ailleurs que les voyages en avion sont pour certains passagers générateurs de stress.

Pour y pallier, des activités sont couramment proposées dans les avions. Ainsi, il arrive que l'on diffuse de la musique ou des films, qu'on donne accès à des jeux vidéo, ou encore qu'on assure un service de restauration.

Toutefois, ces différentes occupations se révèlent dans certains cas des palliatifs insuffisants à l'ennui ou au stress.

Un but de l'invention est d'améliorer à cet égard le confort des passagers des aéronefs.

A cet effet, on prévoit selon l'invention un appui-tête de siège de passager d'aéronef, qui comprend un support et un casque pour loger au moins partiellement la tête du passager, le casque étant fixé au support et dont le casque comprend un corps et au moins une partie montée mobile sur le corps pour prolonger ce dernier, le corps, la partie mobile ou l'une des parties mobiles présentant une forme concave dans deux directions perpendiculaires entre elles.

Ainsi, le casque dans lequel le passager loge sa tête lui offre un isolement sensoriel à l'égard de l'environnement extérieur. Cet isolement peut être plus ou moins prononcé en fonction de la configuration du casque et des fonctionnalités qui lui sont associées. Cet isolement permet au passager de mieux profiter de certaines des distractions offertes, par exemple écouter de la musique, regarder des films, etc. Si le passager est sensible au stress, cet isolement, éventuellement associé à l'une des activités précitées, lui permet plus facilement de se tranquilliser et de se détendre. Dans tous les cas, l'invention améliore donc le confort des passagers et l'agrément de leur voyage.

L'isolement peut être suivant les modes de réalisation un isolement phonique, visuel et/ou olfactif. Il peut être total ou partiel pour l'un quelconque de ces aspects, voire plusieurs d'entre eux ou tous.

On prévoit avantageusement que le casque a une forme telle qu'il s'adapte de façon étroite à la tête du passager.

De préférence, le support forme un appui arrière pour la tête.

Ainsi, la fonction d'appui-tête est remplie indépendamment du casque.

De préférence, le casque est monté mobile par rapport au support.

Ainsi, le passager peut mettre en place le casque sur ou autour de sa tête sans avoir à déplacer cette dernière ou à déplacer une partie de son buste. Le passager peut donc facilement installer le casque puis l'ôter.

Dans un mode de réalisation, le casque est monté mobile entre une position avancée et une position reculée, et/ou entre une position haute et une position basse.

On pourra prévoir que le casque comprend des moyens de réglage d'une position stable du casque.

Le passager occupant le siège peut donc adapter la position du casque en fonction notamment de sa propre morphologie.

De préférence, le casque comprend un corps et au moins une partie montée mobile sur le corps pour prolonger ce dernier.

Ainsi, tout en permettant une installation facile du casque, on offre au passager un isolement prononcé, en raison du fait que sa tête est davantage recouverte par le casque,

Dans un mode de réalisation, la partie mobile ou au moins l'une des parties mobiles est opaque,

Dans un autre mode de réalisation compatible avec le précédent, la partie mobile ou au moins l'une des parties mobiles est transparente.

On pourra notamment prévoir que la partie mobile transparente est montée directement sur la partie mobile opaque.

La partie mobile transparente forme typiquement une visière qui permet au passager à la fois de mieux s'isoler au plan acoustique et de continuer à voir une grande partie de son environnement.

On pourra prévoir que l'appui-tête comprend des moyens pour modifier un degré de transparence de la partie mobile.

De préférence, l'appui-tête comprend un écran opto- électronique formé par une partie, de préférence mobile, du casque.

On peut prévoir que la partie mobile porte elle-même un élément mobile permettant de l'occulter en tout ou partie afin de la faire passer à volonté d'un état opaque à un état transparent et inversement.

Le corps, la partie mobile ou encore l'une des parties mobiles présente par exemple une forme concave, notamment courbe dans au moins une direction, le centre de courbure se trouvant d'un côté du casque formant un logement de réception de la tête du passager. Cette forme peut être celle de tout le casque. La forme peut être concave dans deux directions perpendiculaires entre elles, par exemple pour donner au casque une forme générale sphérique ou une forme générale d'ellipsoïde.

De préférence, l'appui-tête comprend des écouteurs montés mobiles par rapport au support et au casque.

Ces écouteurs permettent au passager d'écouter de la musique ou un film avec une bonne qualité d'audition tout en choisissant leur position pour un meilleur confort. Il peut les éloigner de sa tête notamment lorsqu'il n'en a plus besoin sans donc être gêné par ceux-ci. Les écouteurs étant mobiles par rapport au support et au casque, leur usage et leur configuration sont indépendants de ceux du casque, Ils peuvent donc être utilisés que le passager soit équipé du casque ou non.

De préférence, l'appui-tête comprend des moyens de diffusion d'images.

Le passager peut donc suivre une émission de télévision, regarder un film ou s'adonner à un jeu vidéo par exemple, de façon confortable.

Dans un mode de réalisation, l'appui-tête comprend des lunettes de diffusion d'images montées mobiles par rapport au support et au casque.

Ces lunettes offrent au passager un grand confort de vision. Sachant qu'elles sont mobiles par rapport au support et au casque, le passager peut les utiliser qu'il soit équipé ou non du casque.

De préférence, l'appui-tête comprend des moyens pour diffuser une image d'un clavier et pour coopérer avec l'image pour l'entrée d'instructions et/ou de données à partir du clavier et leur transmission au casque.

On pourra prévoir que l'appui-tête comprend un microphone.

Avantageusement, l'appui-tête comprend des moyens de réception et de traitement d'au moins un signal de type :
- vidéo
- vidéo pour la fourniture d'une image en trois dimensions ;
- vidéo holographique, ou
- TCP/IP.

De préférence, l'appui-tête comprend des moyens de connexion à une source de flux d'air, l'appui-tête étant apte à faire circuler le flux le long d'une face interne du casque.

On réalise donc une circulation d'air entre le casque et la tête du passager assurant une ventilation, un rafraîchissement ou encore une climatisation et améliorant le confort du passager lorsqu'il est équipé du casque.

De préférence, l'appui-tête comprend des moyens pour diffuser au moins une substance odorante.

Avantageusement, l'appui-tête comprend une télécommande.

Cette dernière permet au passager de commander l'une ou l'autre des fonctions associées au casque ou encore les mouvements de ce dernier si une motorisation est prévue à cette fin.

De préférence, l'appui-tête comprend des moyens de montage mobile de l'appui-tête sur un siège de passager.

Ainsi, le passager équipé du casque demeure libre de faire certains mouvements, notamment avec sa tête, par exemple des mouvements d'avant en arrière, des mouvements de gauche à droite ou encore des mouvements de torsion autour d'un axe vertical ou horizontal.

Avantageusement, les moyens de montage sont élastiquement déformables.

Ainsi, la mobilité est procurée par la simple déformation élastique de ces moyens.

On peut prévoir que l'appui-tête comprend des moyens de montage amovibles sur un siège de passager d'aéronef.

Ainsi, on peut installer l'appui-tête rapidement sur un siège par exemple en remplacement de l'appui-tête standard ne comprenant pas le casque. Cette installation peut être faite pour tous les sièges d'une cabine d'un aéronef ou encore sur quelques-uns d'entre eux seulement, à la demande spécifique des passagers correspondants. Il peut s'agir par exemple d'une option payante.

On prévoit également selon l'invention un siège de passager d'aéronef qui comprend un appui-tête selon l'invention.

Dans un mode de réalisation, le casque présente une plus grande largeur en direction transversale inférieure ou égale à la largeur du sommet du dossier. Ces dimensions sont mesurées suivant une direction horizontale, perpendiculaire au plan vertical de symétrie du siège.

Ainsi, le casque s'adapte de façon étroite à la tête du passager et engendre un faible encombrement dans la cabine.

Avantageusement, le siège comprend un dispositif de protection à coussin gonflable (ou «*airbag*»), le coussin étant apte à s'étendre en partie arrière de l'appui-tête.

Ce coussin offre une protection pour le passager situé à l'arrière du siège équipé de l'appui-tête en cas de brutale décélération vers l'avant.

On prévoit encore selon l'invention un aéronef qui comprend au moins un appui-tête et/ou un siège conforme à l'invention.

On prévoit enfin selon l'invention un ensemble d'un appui-tête selon l'invention et de plusieurs éléments de décoration aptes chacun à être apposés sur le casque pour en modifier l'aspect.

On peut ainsi modifier et personnaliser à volonté l'appui-tête.

D'autres caractéristiques et avantages de l'invention apparaîtront encore dans la description suivante d'un mode préféré de réalisation et de variantes donnés à titre d'exemples non limitatifs en référence aux dessins annexés sur lesquels :
- la figure 1 est une vue en perspective d'un aéronef selon l'invention ;
- les figures 2 à 4 sont des vues partielles de l'intérieur de la cabine de l'avion de la figure 1 montrant des sièges équipés d'appui-têtes selon l'invention ;
- les figures 5 à 12 sont des vues illustrant différentes configurations de l'un des appui-têtes de la figure 2 ;
- la figure 13 est une vue analogue à la figure 7 montrant le cumul de ces configurations ;
- la figure 14 est une vue analogue à la figure 5 montrant le passager équipé du casque et des lunettes de l'appui-tête;
- la figure 15 est une vue analogue à la figure 7 montrant le casque en coupe verticale avec le flux de circulation d'air ; et
- la figure 16 est une vue en perspective depuis l'arrière montrant les degrés de liberté de mouvement de l'appui-tête de la figure 5 par rapport au dossier.

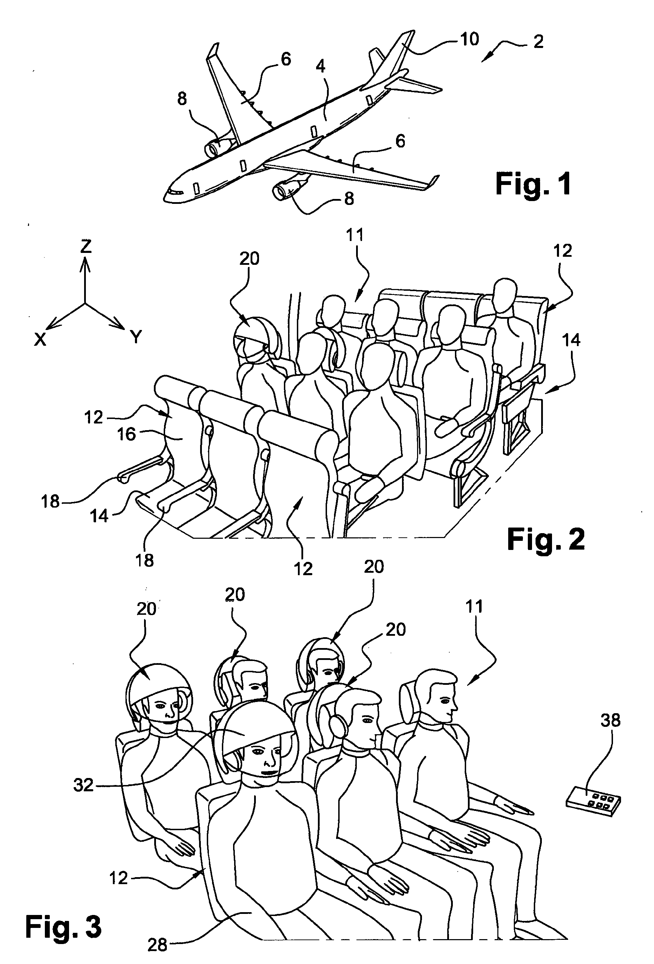

Nous avons illustré à la figure 1 un aéronef selon l'invention qui est en l'espèce un aérodyne et dans le présent exemple un avion 2. Ce dernier comprend un fuselage 4, deux ailes 6 et des réacteurs 8, en l'espèce au nombre de deux et portés par les ailes respectives. L'avion comprend un empennage 10. Il s'agit d'un avion de transport civil de passagers.

On utilise dans la suite le repère X, Y et Z illustré à la figure 2 dans lequel les directions X et Y horizontales désignent respectivement la direction longitudinale du fuselage et la direction perpendiculaire à cette dernière, tandis que la direction Z est la direction verticale.

La cabine 11 de l'avion illustrée aux figures 2 à 4 comprend plusieurs sièges 12 de passager alignés suivant la direction Y pour former des rangées se succédant suivant la direction X. D'une rangée à l'autre, les sièges sont également alignés suivant cette même direction. La cabine comprend ici un couloir 14 s'étendant en partie médiane du fuselage, les sièges étant situés de part et d'autre du couloir. Le couloir est en l'espèce unique. Dans cet exemple, chaque rangée comprend trois sièges de chaque côté du couloir. Chaque siège 12 forme en l'espèce un fauteuil comprenant une assise 14, un dossier 16 et deux accoudoirs 18, les accoudoirs de sièges mitoyens étant communs aux deux sièges.

Certains des sièges 12 sont munis d'un appui-tête 20 selon l'invention visible notamment sur les figures 2 à 16. L'appui-tête comprend un support 21 et un casque 22 fixé au support et monté mobile par rapport à ce dernier.

Le support 21 comprend un coussin 24 formant un appui arrière pour la tête 26 d'un passager 28 occupant le siège.

Le casque 22 comprend en l'espèce une coque principale opaque 30, une coque secondaire opaque 32 et une coque secondaire transparente 34 formant visière, ici toutes trois rigides.

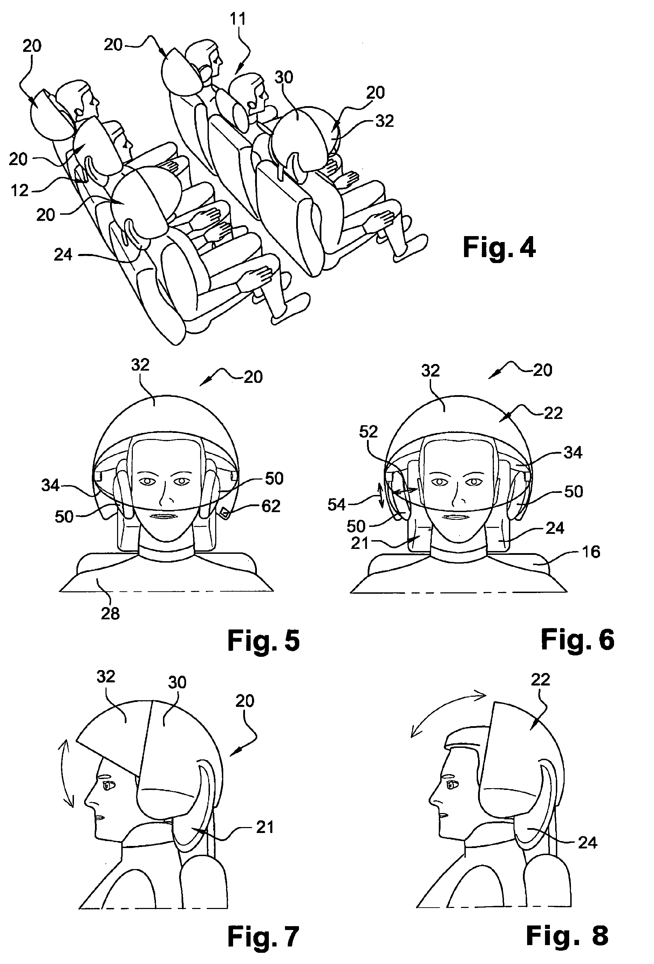

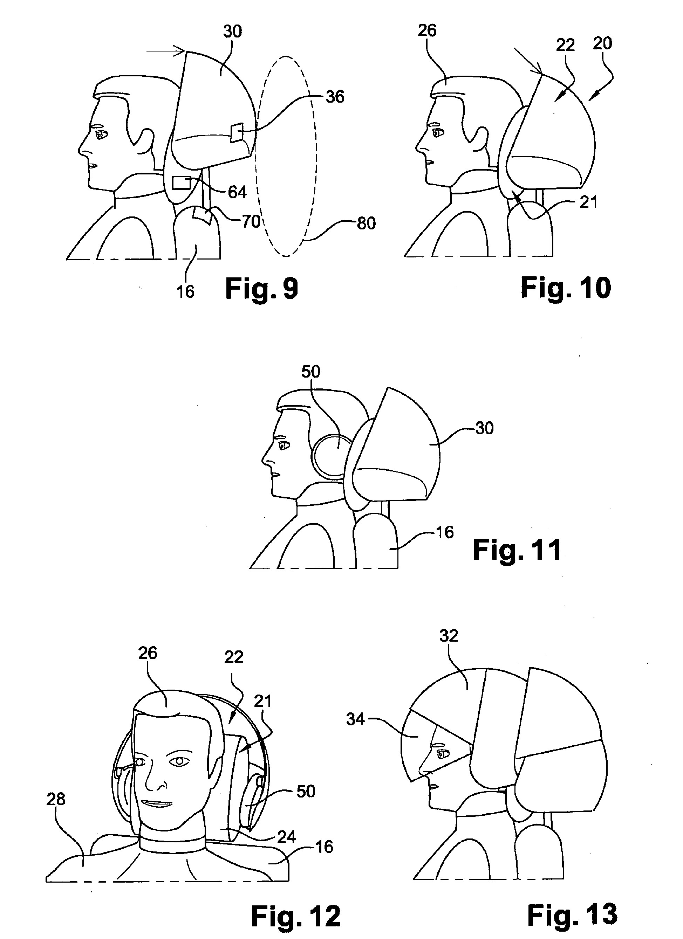

La coque principale 30 est montée mobile par rapport au support 21, en l'espèce suivant la direction verticale Z entre une position stable basse illustrée notamment à la figure 10 et une position stable haute illustrée notamment à la figure 9. Ces deux positions forment ici les extrémités de fin de course verticale de la coque 30 par rapport au support 21. De plus, la coque 30 est montée mobile par rapport au support suivant la direction horizontale X entre une position stable reculée illustrée à la figure 9 et correspondant à la position haute et une position stable avancée illustrée notamment à la figure 8 et se trouvant à la même hauteur que la position reculée. Ces deux positions forment ici les extrémités de fin de course horizontale de la coque 30 par rapport au support 21. Les moyens de montage de la coque 30 sur le support 21 sont prévus en l'espèce de sorte que, à partir de la position avancée, le coque 30 doit d'abord passer en position reculée avant d'être placée en position basse et inversement. Dans le présent exemple, sachant que l'orientation de la coque ne change pas au cours de ces mouvements, on a affaire à un mouvement de translation de la coque 30 par rapport au support 21.

La coque secondaire 32 est montée mobile par rapport à la coque principale 30, en l'espèce par des moyens de montage à rotation autour d'un axe parallèle à la direction Y. La coque 32 peut donc en l'espèce passer d'une position arrière escamotée, illustrée par exemple à la figure 8, dans laquelle elle s'étend à l'intérieur de la coque 30 sans apparaître hors de celle-ci à une position avancée rabattue, illustrée par exemple à la figure 7, dans laquelle elle émerge de la coque 30 à l'avant de cette dernière. La coque 32 est montée mobile directement sur la coque 30, en l'espèce.

La coque 34 est pareillement montée mobile à rotation par rapport à la coque 32 en pouvant occuper une position escamotée à l'intérieur de cette dernière, illustrée par exemple à la figure 7, où elle est invisible depuis l'extérieur du casque, et une position visible illustrée par exemple aux figures 5 et 6 où elle s'étend à l'avant et au-dessous de la coque secondaire 32 . La visière 34 est montée mobile directement sur la coque 32, en l'espèce.

Les trois coques ont des formes creuses concaves, en l'espèce sensiblement en portion de sphère. Elles sont disposées de façon concentrique. Lorsque les trois coques sont visibles comme illustré notamment aux figures 5 et 6, elles s'étendent toutes trois sensiblement dans le prolongement les unes des autres en formant la plus grande partie d'une sphère. Chacune des trois coques présente une concavité, en l'espèce une courbure, dans deux plans perpendiculaires entre eux. On pourrait prévoir toutefois que les rayons de courbure ne sont pas les mêmes dans les deux directions pour au moins l'une des coques.

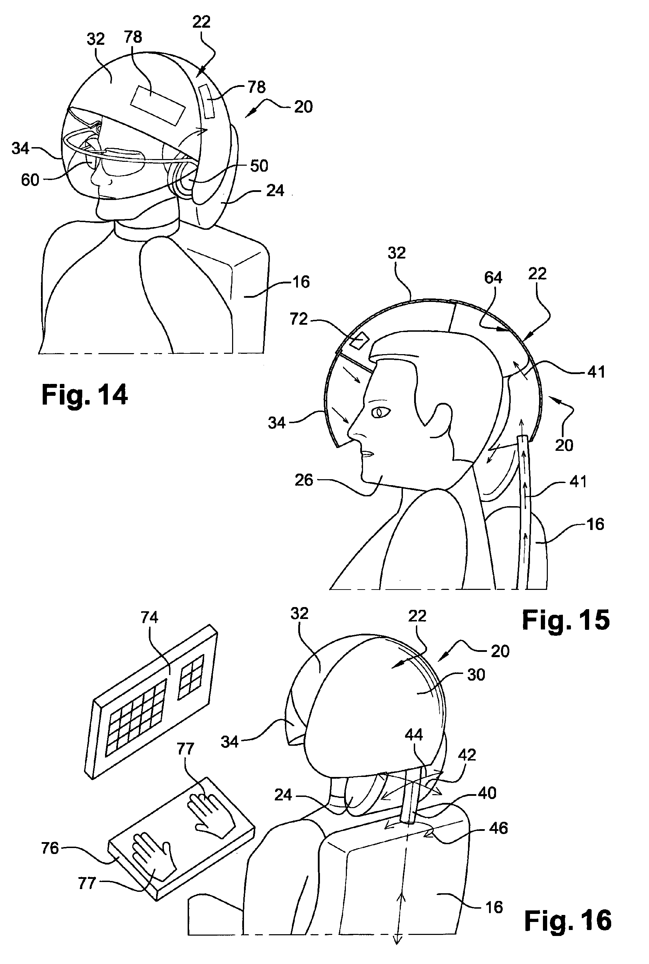

Une certaine différence entre les rayons de courbure est néanmoins prévue pour permettre à la coque transparente d'entrer dans la coque 32 et à cette dernière d'entrer dans la coque 30 comme illustré à la figure 15. La visière 34 a sa face externe en contact avec la face interne de la coque secondaire 32, le bord supérieur arrière de la première pénétrant sous le bord inférieur avant de la seconde. La coque secondaire 32 est dans une configuration analogue par rapport à la coque principale 30,

Comme on le voit notamment sur la figure 9, l'appui 21 s'étend au-dessus du dossier 16, dans le prolongement de ce dernier vers le haut.

En position basse, la coque 30 s'étend en l'espèce à l'arrière du support 21 sans dépasser à l'avant de ce dernier. Elle se trouve aussi intégralement au-dessus du dossier 16. Elle dépasse en partie supérieure de l'appui 21. Comme illustré notamment à la figure 9, en position haute, la coque 30 dépasse davantage de l'appui 21 en partie supérieure.

L'appui-tête est configuré de sorte que, en positions haute et basse, la coque 30 s'étend sur plus de 80 % de sa longueur à l'arrière de la tête 26 du passager en appui sur l'appui 21. En particulier, la coque 30 ne s'étend pas alors en regard de la face supérieure et des faces latérales de la tête. Elle laisse libre notamment le sommet de la tête et les oreilles du passager.

Comme illustré à la figure 8, en position avancée, la coque 30 dépasse de l'appui 21 à l'avant de ce dernier suivant la direction X et au-dessus de ce dernier suivant la direction Y. La coque 30 recouvre partiellement les faces supérieure et latérales de la tête 26 en recouvrant le sommet de la tête et les oreilles. Toute la partie arrière de la tête se trouve alors logée dans le casque 22,

En référence à la figure 7, lorsque la coque 30 est dans la même position avec la coque secondaire 32 déployée, cette dernière s'étend à l'avant de la coque 30 de sorte que le casque recouvre toute la face supérieure de la tête et la plus grande partie de ses faces latérales. Seule la partie inférieure de la tête émerge du casque. La coque 32 a son bord avant s'étendant plus loin que la tête suivant la direction X. Le bord avant inférieur de la coque 32 est dirigé vers l'avant et s'étend en l'espèce dans un plan formant une inclinaison de 30° aviron avec un plan horizontal.

Enfin, en référence aux figures 5 et 6, lorsque, à partir de la même position des coques 30 et 32, la coque 34 est elle aussi déployée et abaissée, elle recouvre en outre la partie haute du visage par l'avant de sorte que la plus grande partie de la tête 26 se trouve reçue et isolée dans le casque 30. La visière transparente s'étend en regard du nez, des yeux et du front du passager et lui permet de continuer à observer son environnement.

On prévoit par exemple que le casque est en position repliée et basse comme sur la figure 11 lorsque le passager s'installe dans son siège. Lorsqu'il souhaite s'équiper du casque, le passager provoque la montée du casque depuis la position basse jusqu'à la position haute, puis l'avancée de la position reculée à la position avancée illustrée à la figure 8. Il peut ensuite en outre déployer la visière opaque 32 et, s'il le souhaite, de surcroît la visière transparente 34. Lorsque le passager ne veut plus être équipé du casque, il effectue les manoeuvres inverses.

On peut prévoir que l'appui-tête comprend des moyens permettant au passager de régler la position basse ou la position haute ou encore la position avancée du casque pour l'adapter à sa propre morphologie.

En l'espèce, le siège est équipé d'une motorisation 36 illustrée à la figure 9 et assurant, sur commande, le déplacement du casque et les différents mouvements de coque précités. Chaque siège est en l'espèce doté d'une télécommande 38 illustrée à la figure 3 et permettant au passager de commander la motorisation pour l'obtention de ces différents mouvements, ainsi que chacune des fonctions décrites plus loin. L'appui-tête est prévu aussi de sorte que, en dépit de cette motorisation, le passager conserve la possibilité d'effectuer ces déplacements lui-même en manoeuvrant les différentes parties de la coque à la main. Il s'agit par exemple d'une utilisation en mode dégradé.

Comme on le voit notamment aux figures 5 et 6, lorsque toutes les coques sont en position et déployées, le casque offre au passager un isolement maximal lui permettant de s'abstraire, dans une certaine mesure au moins, de son environnement et de mieux vivre l'attente et le vol.

Lorsque, comme illustré notamment à la figure 12, le casque est dans sa configuration basse et entièrement repliée, la tête se trouvant totalement hors du casque, le coussin 24 de l'appui-tête sert au passager pour l'appui de sa tête. Le passager conserve cette appui en manoeuvrant le casque et pendant qu'il en est équipé.

Les moyens de montage du casque à l'appui et de montage des différentes parties du casque les unes aux autres sont formés par des mécanismes adaptés qui peuvent être réalisés de différentes façons au moyen de pièces mobiles et de liaisons mécanique classiques, en vue de permettre les mouvements et les fonctionnalités présentées ici.

En référence à la figure 16, l'appui-tête comprend en l'espèce un organe de liaison 40 au dossier 16 du siège. Il s'agit d'un organe de liaison amovible permettant donc de mettre en place l'appui-tête sur le dossier ou de l'en séparer à volonté. Il peut donc être installé sur certains seulement des sièges de la cabine, par exemple sur demande du passager, notamment dans le cadre d'une option payante. On peut naturellement, à l'inverse, prévoir d'équiper systématiquement tous les sièges d'un tel appui-tête.

De plus, il s'agit d'un organe de liaison mobile assurant un montage mobile de l'appui-tête par rapport au dossier 16. Ici, l'organe 40 comprend des moyens élastiquement flexibles permettant au passager, par déformation élastique de l'organe, de mouvoir sa tête lorsqu'elle est logée dans le casque. Il s'agit par exemple de mouvements de torsion d'avant en arrière tels qu'indiqués par la flèche 42, de mouvements de torsion de gauche à droite tels qu'indiqués par la flèche 44 ou encore de mouvements de torsion autour d'un axe vertical comme indiqué par la flèche 46. L'organe 40 est formé ici par un tube de maintien unique et, de ce fait, offre une grande liberté de mouvement au passager. Il est aussi agencé pour permettre un réglage en direction verticale des positions haute et basse en fonction de la morphologie du passager.

L'appui-tête comprend en l'espèce d'autres équipements.

Il comprend ainsi des écouteurs gauche et droit 50 illustrés notamment à la figure 6, Chacun de ces écouteurs est monté mobile par rapport au support 21 et par rapport au casque. Ils sont mobiles suivant les directions latérale Y et verticale Z pour pouvoir être à volonté éloignés ou rapprochés des oreilles respectives comme illustré par la flèche 52 ou encore abaissés ou montés comme illustré par la flèche 54. Cette possibilité de mouvement permet au passager de régler la position des écouteurs en fonction de sa morphologie lorsqu'il souhaite les appliquer contre ses oreilles. Elle permet également au passager à volonté de rapprocher les écouteurs de ses oreilles ou de les en éloigner, notamment lorsqu'il ne souhaite pas s'en servir. Les écouteurs 50 sont reliés aux autres parties de l'appui-tête par des moyens de montage mécaniques appropriés non illustrés. Sur la figure 5, les écouteurs 50 sont dans la position procurant une écoute à haute qualité en étant en contact avec les faces latérales de la tête et en recouvrant les oreilles du passager. Ils s'étendent à distance de la tête sur la figure 6 et se trouvent en position stockée, position dans laquelle ils peuvent aussi permettre une écoute de type ambiance. Les écouteurs ont aussi une mobilité sphérique leur permettant de s'ajuster angulairement contre les faces de la tête. Les écouteurs 50 couvrent la plus grande partie de l'oreille. Ils offrent une multitude de réglages permettant au passager de choisir les types d'ambiance ou d'immersion dont il souhaite bénéficier. L'appui-tête est prévu ici pour diffuser sur commande dans les écouteurs 50 un « bruit blanc » permettant de réduire les bruits de l'environnement, voire de les annuler exactement pour mieux isoler le passager du bruit ambiant.

L'appui-tête comprend en l'espèce des moyens de diffusion d'images. Il s'agit par exemple d'une paire de lunettes 60 de diffusion d'images montée mobile, par des moyens appropriés non représentés, par rapport au support 21 et par rapport au casque. Les lunettes 60 peuvent ainsi avoir une configuration opérationnelle dans laquelle elles sont portées par le passager en s'étendant en regard de ses yeux et en reposant sur son nez. Elles peuvent aussi avoir une configuration inactive dans laquelle elles sont relevées au-dessus ou en arrière de sa tête à l'intérieur du casque. En l'espèce, les lunettes sont mobiles à rotation par rapport au support autour d'un axe parallèle à la direction Y. Les lunettes forment un écran de visualisation. Elles fonctionnent en l'espèce suivant le mode dit de projection holographique. On peut toutefois prévoir en variante que les lunettes sont associées à deux moniteurs indépendants plaqués de façon indépendante sur chaque oeil. En variante, les moyens de diffusion d'images peuvent être prévus pour assurer une projection de l'image sur une face interne de la visière 34.

L'appui-tête comprend en outre, comme illustré à la figure 9, des moyens 64 de réception et de traitement de différents types de signaux électroniques de communication tels qu'un signal de vidéo pour la transmission d'une image en trois dimensions, un signal vidéo pour une image holographique ou encore un signal associé à un protocole de type TCP/IP pour des échanges sur un réseau de communication de type internet, en vue notamment de la diffusion de l'image par les moyens précités. Il comprend aussi des moyens d'alimentation en courant électrique.

En l'espèce, comme illustré à la figure 5, l'appui-tête est également doté d'un microphone 62 logé par exemple à un bord avant inférieur de la coque principale 30.

L'appui-tête selon l'invention offre donc de nombreuses possibilités de distraction et de loisirs multimédia. Il permet ainsi au passager de suivre une vidéo haute définition, par exemple par projection de type holographique sur la face interne de la visière ou encore par l'utilisation des lunettes 60, Les écouteurs 50 sont prévus pour être de grande qualité, les moyens 64 assurant un traitement haute fidélité des signaux audio reçus. Le passager peut, grâce à toutes ces possibilités, visionner des vidéos à images en deux ou en trois dimensions. Les équipements audio et vidéo de l'appui-tête permettent de diffuser différents types de programmes, notamment des programmes anti-stress (sophrologie,...).

L'appui-tête 20 est également doté d'une connectique audio et vidéo permettant au passager de connecter au casque un ou plusieurs appareils électroniques personnels (baladeur audio ou vidéo, micro-ordinateur, PDA, téléphone,...) et de profiter des possibilités multimédia offertes par ces derniers, notamment en lisant ses propres contenus.

L'appui-tête est ici adapté pour permettre au passager d'accéder à un réseau de caméras de l'avion ou de l'aérogare si l'avion et l'aérogare en sont dotés, ce qui lui offre ainsi une vision externe. L'appui-tête est agencé pour offrir au passager un accès Internet et lui permettre de participer à des vidéoconférences ou à des discussions en ligne. Il lui permet de jouer à des jeux vidéo.

L'appui-tête est agencé pour permettre un travail de bureautique, notamment en position tête haute. On associe ici à cette fin à l'appui-tête un clavier virtuel 74 apparaissant dans l'image diffusée par le casque comme illustré à la figure 16. On prévoit que le siège comprend une tablette à digitaliser 76, par exemple fixée à un des accoudoirs et connectée au casque par une liaison adaptée pour communiquer avec ce dernier. Le casque est aussi associé à des moyens pour coopérer avec la tablette pour l'entrée d'instructions et/ou de données par le porteur du casque sur le clavier virtuel 74, ces instructions étant transmises au casque. Ces moyens comprennent ici des gants indexés électroniquement 77 que le passager enfile sur ses mains et place sur la tablette pour actionner à l'image les touches du clavier virtuel et entrer des commandes, des textes, etc. Dans chaque gant 77, chaque doigt est équipé de capteurs de sorte que la position des doigts est connue en relation avec la tablette et donc en relation avec l'image du clavier. A l'intérieur du casque, sur l'écran de visualisation, sont projetées en plus du clavier une ou deux mains virtuelles coopérant avec le clavier et représentant celles du passager. L'objectif est alors pour ce dernier de s'identifier à ce moi virtuel et d'utiliser le clavier virtuel avec ses doitgs virtuels en faisant abstraction du monde réel. Le clavier qui apparaît dans l'image diffusée comprend par exemple des zones affectées à des lettres et des chiffres en ayant une configuration de type « azerty » ou « querty ». Les mots, les chiffres ou les instructions sont ensuite traités ou bien dans le casque s'il comprend un ou plusieurs processeurs informatiques à cette fin, ou transmis à l'extérieur du casque vers des moyens informatiques.

On peut prévoir que la télécommande 38 est réalisée sous forme virtuelle elle aussi en étant projetée sur l'écran et commandée de la même façon à partir des gants et de la tablette.

Alternativement, la télécommande réelle 38 envisagée plus haut est dotée de touches telles que des touches sensitives qui, lorsqu'elles sont actionnées par le passager, entrainent l'affichage d'une télécommande dans l'image diffusée par le casque et l'affichage particulier (avec une couleur différente ou en surbrillance par exemple) de la ou des touches actionnées par le passager. Ainsi, sans regarder la télécommande réelle pendant qu'il l'actionne, il visualise à l'image quelle touche est actionnée.

Comme illustré à la figure 15, l'organe 40 est creux et communique d'une part avec une source d'air prévue dans le dossier 16 et d'autre part avec une cavité interne au casque et s'étendant entre une face interne 64 du casque et la face externe de la tête du passager. Le casque est en effet positionné, configuré et dimensionné de sorte que, lorsqu'il équipe la tête, il ménage une couche d'air de forme générale sphérique, de quelques millimètres ou de quelques centimètres d'épaisseur, entre ces deux faces, couche qui communique avec l'organe 40. Si donc un flux d'air 41 est envoyé à partir du dossier 16 à travers l'organe 40, il parcourt toute cette couche en assurant une ventilation, un rafraîchissement, voire une climatisation de la tête du passager s'il s'agit d'air rafraichi ou climatisé en amont. On peut prévoir que cette ventilation se fait non pas autour de la calotte crânienne, mais seulement au niveau de la nuque, par exemple en coopération avec l'appui 21. L'appuie-tête offre ici au passager la possibilité de choisir l'un ou l'autre des types de flux ambiant, rafraîchi ou climatisé. On peut enrichir l'air distribué avec une ou plusieurs substances odorantes naturelles ou de synthèse. On peut aussi enrichir cet air avec de l'oxygène en vue par exemple de créer un certain type d'ambiance ou de procurer une détente. L'enrichissement de l'air en substances odorantes ou en oxygène est effectuée en amont, par exemple sous l'assise du siège. On peut alternativement prévoir que le casque comprend un dispositif 72 illustré à la figure 14 et apte à diffuser dans l'air à destination du porteur du casque une ou plusieurs substances odorantes.

La visière 34 est dans le présent exemple à effet opto-électronique qui permet d'en commander sur commande l'obscurcissement pour la rendre moins transparente, c'est-à-dire en réduire l'opacité, voire la rendre totalement opaque. Elle est par exemple dotée d'un matériau électrochrome. Le passager peut donc, sur commande, réduire ou supprimer la vision de l'environnement dont il bénéficie et se placer par exemple dans une pénombre, notamment pour mieux jouir des images diffusées par l'appui-tête. La commande de l'obscurcissement est réalisée à la demande de l'utilisateur via par exemple la télécommande 38 à sa disposition.

Comme illustré à la figure 14, le casque peut être à la demande décoré de façon personnalisée, par exemple au moyen d'un film jetable 78 en matière plastique, appliqué et fixé de manière électrostatique sur une face externe du casque. On peut par exemple mettre à disposition du passager un jeu de films 78 (ou d'autres éléments) qu'il pourra au choix appliquer sur le casque pour le décorer. On peut prévoir que la compagnie exploitant l'aéronef a aussi la possibilité de personnaliser les casques.

Comme illustré à la figure 9, l'appui-tête est doté en l'espèce d'un dispositif 70 à coussin gonflable 80 se déployant à l'endroit supposé d'un impact avec la tête du passager occupant le siège situé à l'arrière du siège considéré, en cas de décélération brutale. Le coussin 80 à l'état déployé est illustré en traits pointillés sur la figure 9. Le gonflement du coussin 80, commandé par la détection de la décélération par ce dernier, permet d'amortir le choc de la tête du passager venant en contact avec le coussin. On prévoit en l'espèce le dispositif 70 sur la face supérieure arrière du dossier 16.

On distingue, sur les figures 2 à 4, des sièges équipés d'appui-tête selon l'invention, placés dans les différentes configurations présentées plus haut. Sur la figure 5, le casque est en configuration déployée, en position dite d'immersion. On observe que, à la figure 11, bien que le casque soit en position stockée arrière basse, le passager a les écouteurs 50 sur ses oreilles.

L'appui-tête est doté de moyens adaptés de sorte que la connexion au circuit d'air ainsi que les différentes connexions électriques et électroniques assurant l'alimentation de l'appui-tête sont réalisées automatiquement à l'insertion de l'appui-tête dans le dossier.

Bien entendu, on pourra apporter à l'invention de nombreuses modifications sans sortir du cadre de celle-ci.

On pourra prévoir de se dispenser de l'appui 21 et envisager un siège de passager d'aéronef qui comprend un dossier et un casque monté directement sur le dossier, ce dernier formant le support du casque.

On pourra augmenter ou réduire le nombre de coques formant le casque. On pourra se dispenser de la visière transparente ou translucide.

On pourra prévoir qu'une ou plusieurs des coques sont enveloppantes mais non rigides. On pourra ainsi réaliser le casque avec de la toile et des arceaux de soutien. On peut aussi prévoir de réaliser le casque au moyen d'une toile et d'une armature gonflée.

Le casque pourra avoir une forme hémisphérique et intégrer latéralement des écouteurs mobiles et des lunettes vidéo formées en deux parties ajustables indépendantes l'une de l'autre. En variante, un appui-tête du même type pourra être doté de lunettes telles que les lunettes 60 de la figure 14.

Le casque pourra avoir une forme générale partiellement sphérique ou hémisphérique, notamment à configuration en parasol, et être raccordé au support en étant pendu par son sommet à un arceau ou une potence courbe redescendant vers le support.

Au moins l'une des coques peut présenter une forme concave dans une seule direction, par exemple dans un plan vertical de symétrie du siège, ou un plan horizontal. Ce peut être le cas pour tout le casque.

## Revendications

1. Appui-tête (20) de siège (12) de passager d'aéronef (2), comprenant un support (21) et un casque (22) pour loger au moins partiellement la tête du passager, le casque étant fixé au support, **caractérisé en ce que** le casque comprend un corps (30) et au moins une partie (32, 34) montée mobile sur le corps pour prolonger ce dernier, le corps, la partie mobile ou l'une des parties mobiles présentant une forme concave dans deux directions perpendiculaires entre elles.

2. Appui-tête selon la revendication précédente dans lequel le support (21) forme un appui arrière pour la tête.

3. Appui-tête selon au moins l'une quelconque des revendications précédentes dans lequel le casque (22) est monté mobile par rapport au support (21), notamment entre une position avancée et une position reculée et/ou entre une position haute et une position basse.

4. Appui-tête selon au moins l'une quelconque des revendications précédentes dans lequel la partie mobile ou au moins l'une (32) des parties mobiles est opaque et/ou la partie mobile ou au moins l'une (34) des parties mobiles est transparente.

5. Appui-tête selon au moins l'une quelconque des revendications précédentes qui comprend des écouteurs (50) montés mobiles par rapport au support (21) et au casque (22).

6. Appui-tête selon au moins l'une quelconque des revendications précédentes qui comprend des moyens (60) de diffusion d'images.

7. Appui-tête selon au moins l'une quelconque des revendications précédentes qui comprend un écran opto-électronique formé par une partie (34), de préférence mobile, du casque.

8. Appui-tête selon au moins l'une quelconque des revendications précédentes qui comprend des moyens (60, 76, 77) pour diffuser une image d'un clavier (74) et pour coopérer avec l'image pour l'entrée d'instructions et/ou de données à partir du clavier et leur transmission au casque.

9. Appui-tête selon au moins l'une quelconque des revendications précédentes qui comprend des moyens (40) de connexion à une source de flux d'air, l'appui-tête étant apte à faire circuler le flux le long d'une face interne (64) du casque.

10. Appui-tête selon au moins l'une quelconque des revendications précédentes qui comprend des moyens (72) pour diffuser au moins une substance odorante.

11. Appui-tête selon au moins l'une quelconque des revendications précédentes qui comprend des moyens (40) de montage mobile de l'appui-tête sur un siège (12) de passager, ces moyens étant par exemple élastiquement déformables.

12. Siège (12) de passager d'aéronef **caractérisé en ce qu'**il comprend un appui-tête (20) selon au moins l'une quelconque des revendications précédentes.

13. Ensemble d'un appui-tête (20) selon au moins l'une quelconque des revendications précédentes et de plusieurs éléments de décoration (78) aptes chacun à être apposés sur le casque (22) pour en modifier l'aspect.

14. Siège selon la revendication 12 qui comprend un dispositif de protection (70) à coussin gonflable (80), le coussin étant apte à s'étendre en partie arrière de l'appui-tête.

## Patentansprüche

1. Kopfstütze (20) für einen Passagiersitz (12) eines Luftfahrzeugs (2), welche einen Halter (21) und einen Helm (22) zum wenigstens teilweisen Aufnehmen des Kopfes des Passagiers aufweist, wobei der Helm an dem Halter befestigt ist, **dadurch gekennzeichnet, dass** der Helm einen Körper (30) und wenigstens einen Teil (32, 34), der beweglich an dem Körper angebracht ist, um diesen Letzteren zu verlängern, aufweist, wobei der Körper, der bewegliche Teil oder die beweglichen Teile in zwei zueinander senkrechten Richtungen eine konkave Form aufweisen.

2. Kopfstütze nach dem vorhergehenden Anspruch, wobei der Halter (21) eine hintere Stütze für den Kopf bildet.

3. Kopfstütze nach wenigstens einem der vorhergehenden Ansprüche, wobei der Helm (22) beweglich in Bezug auf den Halter (21) angebracht ist, insbesondere zwischen einer vorgestellten Position und einer zurückgestellten Position und/oder zwischen einer hohen Position und einer niedrigen Position.

4. Kopfstütze nach wenigstens einem der vorhergehenden Ansprüche, wobei der bewegliche Teil oder wenigstens einer (32) der beweglichen Teile undurchsichtig ist und/oder der bewegliche Teil oder wenigstens einer (34) der beweglichen Teile durchsichtig ist.

5. Kopfstütze nach wenigstens einem der vorhergehenden Ansprüche, welche Hörmuscheln (50) aufweist, die beweglich in Bezug auf den Halter (21) und auf den Helm (22) angebracht sind.

6. Kopfstütze nach wenigstens einem der vorhergehenden Ansprüche, welche Mittel (60) zum Senden von Bildern aufweist.

7. Kopfstütze nach wenigstens einem der vorhergehenden Ansprüche, welche einen optoelektronischen Bildschirm aufweist, der von einem vorzugsweise beweglichen Teil (34) des Helms gebildet wird.

8. Kopfstütze nach wenigstens einem der vorhergehenden Ansprüche, welche Mittel (60, 76, 77) zum Senden eines Bildes einer Tastatur (74) und zum Zusammenwirken mit dem Bild zur Eingabe von Anweisungen und/oder von Daten von der Tastatur aus und zu ihrer Übertragung zum Helm aufweist.

9. Kopfstütze nach wenigstens einem der vorhergehenden Ansprüche, welche Mittel (40) zur Verbindung mit einer Quelle eines Luftstroms aufweist, wobei die Kopfstütze geeignet ist, den Luftstrom entlang einer Innenfläche (64) des Helms zirkulieren zu lassen.

10. Kopfstütze nach wenigstens eine m der vorhergehenden Ansprüche, welche Mittel (72) zum Verbreiten wenigstens eines Geruchsstoffes aufweist.

11. Kopfstütze nach wenigstens einem der vorhergehenden Ansprüche, welche Mittel (40) zur beweglichen Anbringung der Kopfstütze an einem Passagiersitz (12) aufweist, wobei diese Mittel zum Beispiel elastisch verformbar sind.

12. Passagiersitz (12) eines Luftfahrzeugs, **dadurch gekennzeichnet, dass** er eine Kopfstütze (20) nach wenigstens einem der vorhergehenden Ansprüche aufweist.

13. Anordnung einer Kopfstütze (20) nach wenigstens einem der vorhergehenden Ansprüche und aus mehreren Dekorationselementen (78), die jeweils geeignet sind, an dem Helm (22) angebracht zu werden, um dessen Aussehen zu verändern.

14. Sitz nach Anspruch 12, welcher eine Schutzvorrichtung (70) mit einem Airbag (80) aufweist, wobei der Airbag geeignet ist, sich im hinteren Teil der Kopfstütze zu erstrecken.

## Claims

1. Headrest (20) of a passenger seat (12) of an aircraft (2), comprising a support (21) and a headset (22) for at least partially housing the head of the passenger, the headset being fixed to the support, **characterized in that** the headset comprises a body (30) and at least one part (32, 34) mounted to move on the body to prolong the latter, the body, the moving part or one of the moving parts having a concave shape in two mutually perpendicular directions.

2. Headrest according to the preceding claim, in which the support (21) forms a backrest for the head.

3. Headrest according to at least any one of the preceding claims, in which the headset (22) is mounted to move relative to the support (21), notably between an advanced position and a retracted position and/or between a high position and a low position.

4. Headrest according to at least any one of the preceding claims, in which the moving part or at least one (32) of the moving parts is opaque and/or the moving part or at least one (34) of the moving parts is transparent.

5. Headrest according to at least any one of the preceding claims, which comprises earphones (50) mounted to move relative to the support (21) and to the headset (22).

6. Headrest according to at least any one of the preceding claims, which comprises image broadcasting means (60).

7. Headrest according to at least any one of the preceding claims, which comprises an optoelectronic screen formed by a part (34), preferably movable, of the headset.

8. Headrest according to at least any one of the preceding claims, which comprises means (60, 76, 77) for broadcasting an image of a keyboard (74) and for cooperating with the image for instructions and/or data to be entered from the keyboard and transmitted to the headset.

9. Headrest according to at least any one of the preceding claims, which comprises means (40) for connecting to an air flow source, the headrest being suitable for circulating the flow along an internal face (64) of the headset.

10. Headrest according to at least any one of the preceding claims, which comprises means (72) for diffusing at least one fragrant substance.

11. Headrest according to at least any one of the preceding claims, which comprises means (40) for movably mounting the headrest on a passenger seat (12), these means being, for example, elastically deformable.

12. Aircraft passenger seat (12), **characterized in that** it comprises a headrest (20) according to at least any one of the preceding claims.

13. Assembly of a headrest (20) according to at least any one of the preceding claims and of several decorative elements (78) each suitable for being affixed to the headset (22) to modify the appearance thereof.

14. Seat according to Claim 12, which comprises a protection device (70) with inflatable cushion (80), the cushion being suitable for being extended in the back part of the headrest.
